# EUROPÄISCHE PATENTSCHRIFT

(11) **EP 2 695 030 B1**
(45) Veröffentlichungstag und Bekanntmachung des Hinweises auf die Patenterteilung: **22.11.2017**
(21) Anmeldenummer: 12713077.1
(22) Anmeldetag: 28.03.2012
(51) Int. Cl.: G05D 7/00, F16K 1/44, F16K 31/122

(54) **VORRICHTUNG ZUM ÜBERWACHEN UND STEUERN EINES VENTILS UND DERARTIGES VENTIL**
APPARATUS FOR THE MONITORING AND CONTROL OF A VALVE AND THE CORRESPONDING VALVE
DISPOSITIF POUR SURVEILLER ET COMMANDER UNE SOUPAPE, ET SOUPAPE CORRESPONDANTE

(30) Priorität: 01.04.2011 DE 102011016650
(43) Veröffentlichungstag der Anmeldung: 12.02.2014
(73) Patentinhaber: Pentair Südmo GmbH, 73469 Riesbürg (DE)
(72) Erfinder: STARK, Heiko, 86757 Wallerstein (DE)
(74) Vertreter: Witte, Weller & Partner Patentanwälte mbB
(86) Internationale Anmeldenummer: PCT/EP2012/055561
(87) Internationale Veröffentlichungsnummer: WO 2012/130904

(56) Entgegenhaltungen:
- WO-A1-2005/097792
- DE-A1-102006 039 493
- US-A1- 2010 121 496

## Beschreibung

Die Erfindung betrifft eine Vorrichtung zum Überwachen und Steuern eines Stellzustandes zumindest eines Schließgliedes eines Ventils einer prozesstechnischen Anlage, mit einer Sensorik zum Erfassen des Stellzustandes des zumindest einen Schließgliedes, und mit einer Aktuatorik zum Stellen des zumindest einen Schließgliedes, wobei die Sensorik im oder am Ventil angeordnet ist, und wobei die Aktuatorik getrennt von der Sensorik angeordnet ist.

Die Erfindung betrifft ferner ein Ventil einer prozesstechnischen Anlage, mit zumindest einem Schließglied, und mit einer Vorrichtung zum Überwachen und Steuern eines Stellzustandes des zumindest einen Schließgliedes.

Eine Vorrichtung zum Überwachen und Steuern der eingangs genannten Art sowie ein Ventil der eingangs genannten Art sind aus DE 10 2006 039 493 A1 bekannt.

Die Erfindung bezieht sich auf ein Ventil der eingangs genannten Art, das in einer prozesstechnischen Anlage, bspw. einer lebensmitteltechnischen oder pharmazeutisch-technischen oder chemischen Anlage verwendet wird, um produktführende Rohrleitungen voneinander schaltbar zu trennen, oder um bspw. einen Tank, bspw. einen Produkttank von einer Zufuhr- und/oder Abfuhrleitung für das Produkt schaltbar zu trennen.

In einer prozesstechnischen Anlage sind je nach Komplexität der Anlage eine Mehrzahl derartiger Ventile vorhanden. Je nach Anforderung an die prozesstechnische Anlage im Hinblick auf mikrobiologische Reinheit und die entsprechende Reinigbarkeit der vom Produkt beaufschlagten Teile der Anlage und die damit einhergehenden Anforderungen an die durch die Ventile gewährleistete Trennung feindlicher Medien, bspw. Produkt- und Reinigungsflüssigkeit, sind solche Ventile als Doppeldichtventil, als Doppelsitzventil oder bei geringeren Anforderungen als Einfachsitzventil oder Klappenventil ausgebildet. Während beispielsweise bei Doppeldichtventilen und Doppelsitzventilen das zumindest eine Schließglied durch einen axialen Hub gestellt wird, wird bei einem Klappenventil das zumindest eine Schließglied durch eine Drehbewegung gestellt.

Die vorliegende Erfindung lässt sich bei allen Arten von Ventilen, die in einer prozesstechnischen Anlage verwendet werden, anwenden, unabhängig davon, ob das zumindest eine Schließglied durch eine axiale Hubbewegung oder durch eine Drehbewegung gestellt wird.

Ein Ventil, bei dem eine erfindungsgemäße Vorrichtung zum Überwachen und Steuern vorgesehen ist, weist zumindest ein Schließglied auf, das zumindest zwei Stellzustände, und zwar offen und geschlossen einnehmen kann. Bei bestimmten Ventilen prozesstechnischer Anlagen, bspw. Doppelsitzventilen, kann das zumindest eine Schließglied noch einen dritten Stellzustand einnehmen, der als Takten oder Anlüften bezeichnet wird, worunter zu verstehen ist, dass das Schließglied von seinem Schließgliedsitz nur um einen geringen Hub wegbewegt wird, um so einen Spalt für den Durchtritt eines Mediums, insbesondere Reinigungsflüssigkeit, zu ermöglichen.

Da prozesstechnische Anlagen heutzutage im überwiegend automatischem Betrieb gefahren werden, ist es erforderlich, zumindest jedoch wünschenswert, den Betriebszustand des jeweiligen Ventils, genauer gesagt den Stellzustand des zumindest einen Schließgliedes des Ventils zu überwachen. Hierfür ist die eingangs genannte Vorrichtung vorgesehen, die den Stellzustand des zumindest einen Schließgliedes des Ventils dahingehend überwacht, ob sich das zumindest eine Schließglied in seiner Schließstellung oder in seiner Offenstellung oder ggf. in seiner Anlüft- oder Taktstellung befindet.

Die Vorrichtung überwacht jedoch nicht nur den Stellzustand des zumindest einen Schließgliedes, sondern steuert auch den Stellzustand, indem sie das zumindest eine Schließglied entsprechend dem gerade ablaufenden Prozess in der prozesstechnischen Anlage schließt oder öffnet oder ggf. taktet bzw. anlüftet.

Die Vorrichtung zum Überwachen und Steuern des Stellzustandes des zumindest einen Schließgliedes des Ventils weist entsprechend eine Sensorik zum Erfassen des Stellzustandes des zumindest einen Schließgliedes und eine Aktuatorik zum Stellen des zumindest einen Schließgliedes auf. Naturgemäß ist die Sensorik im oder am Ventil angeordnet, um den Ist-Stellzustand des zumindest einen Schließgliedes zu erfassen.

Hinsichtlich der Anordnung der Aktuatorik zum Stellen des zumindest einen Schließgliedes und dem Zusammenwirken zwischen der Sensorik und der Aktuatorik wurden im Stand der Technik unterschiedliche Konzepte verfolgt.

Üblicherweise wird das zumindest eine Schließglied des Ventils mittels eines Pneumatikantriebs gestellt. Die Aktuatorik der Vorrichtung zum Überwachen und Steuern des Stellzustandes des zumindest einen Schließgliedes weist zum Steuern des Stellzustandes des zumindest einen Schließgliedes bspw. ein schaltbares Pneumatikventil auf, das in Form eines Magnetventils ausgebildet sein kann, um die Druckluftzufuhr zum Stellen des zumindest einen Schließgliedes zu schalten.

Eines der bislang verfolgten Konzepte der Anordnung der Aktuatorik besteht darin, die Aktuatorik fernab von dem Ventil in einem Schaltschrank anzuordnen. Dabei wird üblicherweise für alle oder zumindest einige Ventile der prozesstechnischen Anlage die gesamte Aktuatorik zentral in dem Schaltschrank zusammengefasst. In den Schaltschrank führt eine Druckluftgrundversorgungsleitung, die auf die mehreren schaltbaren Pneumatikventile im Schaltschrank verzweigt ist. Bei diesem Konzept wird die im Schaltschrank vorhandene Aktuatorik nicht unmittelbar über die Sensorik, die im oder am Ventil angeordnet ist, gesteuert, sondern die Steuerung der Aktuatorik erfolgt über eine zentrale Steuervorrichtung. Dies hat nicht nur den Nachteil einer aufwändigen Verschaltung der Aktuatorik und der Sensorik aller vorhandenen Ventile mit der zentralen Steuerung, sondern ein weiterer Nachteil besteht darin, dass lange Druckluftleitungen von den einzelnen schaltbaren Pneumatikventilen im Schaltschrank zu dem oder den fernab angeordneten Ventilen erforderlich sind. Dies erhöht den Luftverbrauch und führt außerdem zu längeren Schaltzeiten.

Aus dem oben genannten Dokument DE 10 2006 039 493 A1 ist ein doppelt dichtendes Ventil bekannt, insbesondere für die Lebensmittel-, Getränke und die pharmazeutische Industrie, die eine Sensorik zum Überwachen des Stellzustandes der beiden Schließglieder des Ventils aufweist. Die Meldesignale der Sensoren werden an eine Schaltwarte geliefert oder können am Gehäuse des Steuerantriebes selbst angezeigt werden, beispielsweise durch Aufleuchten von entsprechend bezeichneten Signallampen.

Ein davon unterschiedliches Konzept der Anordnung der Aktuatorik besteht darin, die Sensorik zum Erfassen des Stellzustandes und die Aktuatorik zum Stellen des zumindest einen Schließgliedes in einem gemeinsamen Gehäuse für jedes Ventil dezentral am jeweiligen Ventil anzuordnen. Im Fall, dass die Aktuatorik ein oder mehrere schaltbare Pneumatikventile aufweist, sind diese bei dieser Ausführung der Vorrichtung zum Überwachen und Steuern des Stellzustandes des zumindest einen Schließgliedes des Ventils am Gehäuse der Überwachungs- und Steuerungsvorrichtung angeordnet. Eine solche Vorrichtung zum Überwachen und Steuern des Stellzustandes zumindest eines Schließgliedes eines Ventils wird von der Firma Südmo Components GmbH unter der Kennzeichnung IntelliTop® vertrieben. Die Sensorik der Vorrichtung steuert dabei die Aktuatorik unmittelbar an. Der Vorteil dieses Konzeptes besteht darin, dass die Druckluftleitungen von den schaltbaren Pneumatikventilen zu den Drucklufteinlässen am Gehäuse des Antriebs des Ventils sehr kurz sind.

Ein Nachteil dieser bekannten Vorrichtung zum Überwachen und Steuern des Stellzustandes zumindest eines Schließgliedes des Ventils besteht jedoch darin, dass sie vergleichsweise kostenaufwändig in der Herstellung ist und daher als "High-end-Produkt" zu betrachten ist.

Die erfindungsgemäße Vorrichtung geht demgegenüber von einer Ausführung aus, bei der die Aktuatorik wie eingangs beschrieben, getrennt von der Sensorik angeordnet ist.

Vor dem Hintergrund der bekannten Vorrichtungen zum Überwachen und Steuern eines Stellzustandes zumindest eines Schließgliedes eines Ventils einer prozesstechnischen Anlage, bei denen die Sensorik und die Aktuatorik voneinander getrennt angeordnet sind, liegt der vorliegenden Erfindung die Aufgabe zugrunde, den Verschaltungsaufwand der Vorrichtung und damit auch den Kostenaufwand zu verringern.

Erfindungsgemäß wird diese Aufgabe hinsichtlich der eingangs genannten Vorrichtung zum Überwachen und Steuern eines Stellzustandes zumindest eines Schließgliedes eines Ventils einer prozesstechnischen Anlage dadurch gelöst, dass die Sensorik eine Steuerelektronik zum Steuern der Aktuatorik aufweist und die Aktuatorik unmittelbar ansteuert, um das zumindest eine Schließglied in Abhängigkeit von dem von der Sensorik erfassten Stellzustand zu stellen.

Die erfindungsgemäße Vorrichtung weist demnach eine Sensorik und eine Aktuatorik auf, die voneinander getrennt angeordnet sind. Hierdurch kann die Sensorik in einem eigenen Gehäuse, oder in das Ventilgehäuse integriert, kostengünstig ausgeführt werden. Erfindungsgemäß steuert die Sensorik über eine Steuerelektronik die Aktuatorik unmittelbar an, um das zumindest eine Schließglied in Abhängigkeit von dem erfassten Stellzustand zu stellen, wodurch der hohe Vorschaltungsaufwand bei den bekannten Vorrichtungen, bei der die Sensorik und die Aktuatorik getrennt voneinander angeordnet sind, wesentlich verringert ist, weil auf die Verschaltung einer zentralen Steuereinheit mit sowohl der Sensorik als auch mit der Aktuatorik verzichtet werden kann. Auf diese Weise wird eine insgesamt kostengünstige Ausgestaltung einer Vorrichtung zum Überwachen und Steuern des Stellzustandes des zumindest einen Schließgliedes des Ventils bereitgestellt.

Vorzugsweise ist die Sensorik über zumindest eine Steuersignalleitung mit der Aktuatorik verbunden, wodurch eine kostengünstige Ausführung der Signalübertragung von der Sensorik auf die Aktuatorik geschaffen wird.

In einer bevorzugten Ausgestaltung ist die Aktuatorik von der Sensorik getrennt am Ventil angeordnet.

Hierbei ist von Vorteil, dass Steuersignalleitungen von der Sensorik zur Aktuatorik kurz gehalten werden können, weil die Aktuatorik in Nähe zum Ventil und damit zur Sensorik angeordnet ist.

In einer weiteren bevorzugten Ausgestaltung ist die Sensorik in einem Gehäuse aufgenommen, das am Ventil angeordnet ist.

Günstig ist eine Anordnung des Sensorikgehäuses auf dem Antriebsgehäuse des Ventils, wobei jedoch auch andere Anordnungen des Sensorikgehäuses denkbar sind, bspw. seitlich am Gehäuse des Antriebs, oder das Sensorikgehäuse ist in das Gehäuse des Antriebs integriert oder fällt mit diesem zusammen.

In einer weiteren bevorzugten Ausgestaltung ist das zumindest eine Schließglied mittels eines Pneumatikantriebes stellbar, wobei die Aktuatorik zumindest ein schaltbares Pneumatikventil aufweist, das die Druckluftzufuhr zum Stellen des zumindest einen Schließgliedes steuert, wobei die Sensorik das Pneumatikventil ansteuert, um dieses zu öffnen oder zu schließen.

Diese Ausgestaltung, gemäß der das zumindest eine Schließglied mittels eines Pneumatikantriebes stellbar ist, hat den Vorteil, dass lange Druckluftleitungen von einer zentral angeordneten Aktuatorik wie im Stand der Technik vermieden werden. Stattdessen ist gemäß der vorstehend genannten Ausgestaltung nur eine Druckluftgrundversorgungsleitung erforderlich, die sich dann auf die schaltbaren Pneumatikventile verzweigt, wobei die Verzweigungsleitungen kurz gehalten sein können.

Vorzugsweise ist das zumindest eine Pneumatikventil ein Magnetventil. Allgemein kann das Pneumatikventil als elektrisch oder elektromagnetisch betätigbares Ventil beliebiger Bauart ausgebildet sein.

Weiter vorzugsweise ist das zumindest eine Pneumatikventil unmittelbar an einem Druckluftanschluss an einem Gehäuse des Pneumatikantriebs des Ventils angeordnet.

Hierbei ist von Vorteil, dass das zumindest eine Pneumatikventil und der Druckluftanschluss miteinander vereint und auf diese Weise wenig Platz beanspruchend unmittelbar am Antriebsgehäuse des Ventils angebracht werden können.

In einer weiteren bevorzugten Ausgestaltung weist die Aktuatorik eine Mehrzahl von schaltbaren Pneumatikventilen auf, die an einer Mehrzahl an Druckluftanschlüssen am Ventil angeordnet sind.

Diese Ausgestaltung eignet sich insbesondere für ein Ventil einer prozesstechnischen Anlage, das mehrere Schließglieder aufweist, bspw. im Fall eines Doppelsitzventils, bei dem die beiden Schließglieder unabhängig voneinander stellbar sind.

Des Weiteren ist bevorzugt, wenn die Sensorik zum Erfassen von Stellzuständen mehrerer Schließglieder des Ventils ausgelegt ist.

Ein erfindungsgemäßes Ventil einer prozesstechnischen Anlage der eingangs genannten Art weist eine Vorrichtung zum Überwachen und Steuern eines Stellzustandes zumindest eines Schließgliedes gemäß einer oder mehreren der vorstehend genannten Ausgestaltungen auf.

Ein solches Ventil kann als Doppeldicht-, Doppelsitz- oder Einfachsitzventil, oder als Klappenventil ausgeführt sein, um hier Beispiele zu nennen.

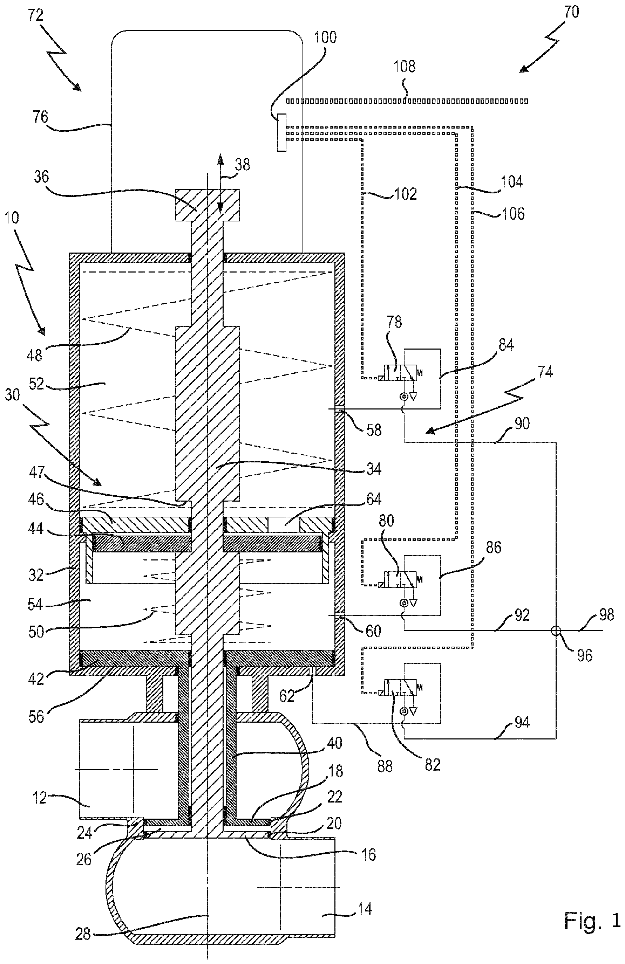

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel ist in der Zeichnung darstellt und wird mit Bezug auf diese hiernach näher beschrieben.

Die einzige Figur zeigt schematisch und im Längsschnitt ein Ventil einer prozesstechnischen Anlage mit einer Vorrichtung zum Überwachen und Steuern eines Stellzustandes zumindest eines Schließgliedes des Ventils.

In der einzigen Figur ist ein mit dem allgemeinen Bezugszeichen 10 versehenes Ventil einer prozesstechnischen Anlage dargestellt. Die prozesstechnische Anlage, in der das Ventil 10 verbaut ist, kann bspw. eine lebensmitteltechnische Anlage sein.

Das Ventil 10, das in der Figur nur schematisch dargestellt ist, ist im gezeigten Ausführungsbeispiel als Doppelsitzventil ausgeführt.

Das Ventil 10 dient zum Trennen zweier Rohrleitungen 12 und 14, wenn das Ventil 10 geschlossen ist, wie in der Figur gezeigt ist. Durch Öffnen des Ventils 10 kommunizieren die beiden Rohrleitungen 12 und 14 miteinander.

Zur Trennung der beiden Rohrleitungen 12 und 14 im geschlossenen Zustand des Ventils 10 weist das Ventil 10 ein erstes Schließglied 16 und ein zweites Schließglied 18 auf, entsprechend der Ausgestaltung des Ventils 10 im vorliegenden Ausführungsbeispiel als Doppelsitzventil.

In der in der Figur gezeigten Schließstellung des Ventils 10 wirkt das erste Schließglied 16 mit einem ersten Schließgliedsitz 20 dichtend zusammen, und das zweite Schließglied 18 wirkt mit einem zweiten Schließgliedsitz 22 dichtend zusammen. Die Schließgliedsitze 20 und 22 sind an einem Ventilgehäuseabschnitt 24 zwischen den beiden Rohrleitungen 12 und 14 angeordnet.

Zwischen den beiden Schließgliedern 16 und 18 befindet sich ein sog. Leckageraum 26, wie er bei Doppelsitzventilen üblich ist.

Aus ihrer in der Figur gezeigten jeweiligen Schließstellung lassen sich die Schließglieder 16 und 18 in Richtung einer Längsachse 28 axial verfahren, und zwar sowohl gemeinsam (Öffnen und Schließen) als auch unabhängig voneinander (Takten des einen Schließgliedes, während das andere in Schließstellung bleibt.)

Unter dem Verfahren der Schließglieder 16 und 18 wird im Sinne der vorliegenden Beschreibung das Stellen der Schließglieder 16 und 18 verstanden.

Zum Stellen der Schließglieder 16 und 18 weist das Ventil 10 einen mit dem allgemeinen Bezugszeichen 30 versehenen Antrieb auf. Der Antrieb 30 ist in einem weiteren Ventilgehäuseabschnitt 32 angeordnet, der mit dem Ventilgehäuseabschnitt 24 verbunden ist.

Der Antrieb 30 weist eine Antriebsstange 34 auf, die mit dem ersten Schließglied 16 fest verbunden ist. Ein oberes Ende 36 der Antriebsstange 34 ragt aus dem Ventilgehäuseabschnitt 32 heraus.

Die Antriebsstange 34 und damit das erste Schließglied 16 ist in Richtung eines Doppelpfeils 38 in Richtung der Längsachse 28 axial verfahrbar.

Das zweite Schließglied 18 weist ein Antriebselement auf, das in Form eines Rohres 40 ausgebildet ist, das mit dem zweiten Schließglied 18 fest verbunden ist. Das Rohr 40 sitzt auf der Antriebsstange 34 und ist in Richtung der Längsachse 28 relativ zu dieser axial beweglich.

Ein oberes Ende des Rohres 40 weist einen ersten Kolben 42 auf, der in dem Ventilgehäuseabschnitt 32 angeordnet ist. Der Kolben 42 ist mit dem Rohr 40 und damit mit dem zweiten Schließglied 18 fest verbunden.

In dem Ventilgehäuseabschnitt 32 befindet sich ein zweiter Kolben 44 sowie ein dritter Kolben 46, die mit der Antriebsstange 34 nicht fest verbunden sind, sondern relativ zu dieser und relativ zueinander in Richtung der Längsachse 28 axial verfahrbar sind.

Zwischen dem dritten Kolben 46 und dem oberen Ende des Ventilgehäuseabschnitts 32 ist eine erste Druckfeder 48 angeordnet, die einen nach unten gerichteten Druck auf den dritten Kolben 46 ausübt. Zwischen dem ersten Kolben 42 und dem zweiten Kolben 44 befindet sich eine zweite Druckfeder 50, die einen nach unten gerichteten Druck auf den ersten Kolben 42 ausübt.

Über die Federkräfte der beiden Druckfedern 48 und 50 werden die beiden Schließglieder 16 und 18 in ihrer in der Figur gezeigten Schließstellung gehalten.

Der Antrieb 30 ist als Pneumatikantrieb ausgebildet, wobei die drei Kolben 42, 44 und 46 Bestandteil dieses Pneumatikantriebes sind. Die Kolben 42, 44 und 46 unterteilen den Innenraum des Ventilgehäuseabschnittes 32 in drei Druckräume, und zwar einen ersten Druckraum 52 oberhalb des dritten Kolbens 46, einen zweiten Druckraum 54 zwischen dem ersten Kolben 42 und dem zweiten Kolben 44, und einen dritten Druckraum 56 zwischen dem ersten Kolben 42 und dem unteren Ende des Ventilgehäuseabschnitts 32, wobei der dritte Druckraum 56 in der Betriebsstellung des Ventils 10 gemäß der Figur (Schließstellung des Ventils 10) auf das Volumen 0 reduziert ist.

Um die jeweiligen Druckräume 52, 54 bzw. 56 mit Druckluft zu beaufschlagen, sind im Ventilgehäuseabschnitt 32 ein erster Drucklufteinlass 58, ein zweiter Drucklufteinlass 60 und ein dritter Drucklufteinlass 62 vorhanden.

Durch Beaufschlagen des zweiten Druckraums 54 über den Drucklufteinlass 60 wird der zweite Kolben 44 gegen den dritten Kolben 46 und der dritte Kolben 46 gegen eine Schulter 47 der Antriebsstange 34 gefahren, wodurch dieser nach oben bewegt wird. Dabei bewegt sich das erste Schließglied 16 gegen das zweite Schließglied 18 und unter Mitnahme des zweiten Schließgliedes 18 werden beide Schließglieder 16 und 18 in ihre Offenstellung überführt, d.h. die Schließglieder 16 und 18 werden in ihre Offenstellung gestellt. Der Kolben 46 wird dabei vom Kolben 44 mit nach oben bewegt.

Durch Beaufschlagen des ersten Druckraums 52 über den Drucklufteinlass 58 wird über eine Öffnung 64 im Kolben 46 Druck auf den Kolben 44 nach unten ausgeübt, wodurch das erste Schließglied 16 nach unten zum Anlüften bzw. Takten vom Schließgliedsitz 20 weg verfahren wird.

Durch Beaufschlagen des dritten Druckraums 56 über den Drucklufteinlass 62 wird der Kolben 42 nach oben bewegt, wodurch das zweite Schließglied 18 von seinem Schließgliedsitz 22 zum Takten bzw. Anlüften nach oben verfahren wird.

Das Stellen der Schließglieder 16 und 18 aus der jeweiligen Offen- oder Takt- bzw. Anlüftstellung in die in der Figur gezeigten Schließstellung erfolgt unter der Wirkung der Druckfedern 48 und 50 durch Entspannen des jeweiligen Druckraums 52, 54 bzw. 56.

Das Ventil 10 weist eine mit dem allgemeinen Bezugszeichen 70 versehene Vorrichtung zum Überwachen und Steuern des Stellzustandes des Schließgliedes 16 auf. Die Vorrichtung 70 weist eine mit dem allgemeinen Bezugszeichen 72 versehene Sensorik und eine mit dem allgemeinen Bezugszeichen 74 versehene Aktuatorik auf.

Die Sensorik 72 ist von der Aktuatorik 74 getrennt angeordnet, wobei die Sensorik 72 in einem Gehäuse 76 aufgenommen ist, das am Ventil 10, im gezeigten Ausführungsbeispiel auf dem Ventilgehäuseabschnitt 32 des Antriebs 30 angeordnet ist. Die Sensorik 72 weist bspw. ein nicht näher dargestelltes Weglängenmesssystem auf, das die Position des Endes 36 der Antriebsstange 34 und damit den Stellzustand des ersten Schließgliedes 16 über eine Weglängenmessung erfasst. Die Sensorik kann zum Erfassen des Stellzustandes des Schließgliedes 16 jedoch auch eine andere Art von Erfassungssystem aufweisen, bspw. induktive oder kapazitive Näherungssensoren oder dergleichen, die entsprechend mit dem oberen Ende 36 der Antriebsstange 34 oder einem anderen Teil der Antriebsstange 34 zusammenwirken, um den Stellzustand des Schließgliedes 16 zu erfassen.

Hier sei angemerkt, dass im Fall, dass anstelle des Ventils 10, bei dem das Schließglied 16 durch einen axialen Hub gestellt wird, ein Ventil mit einem drehbaren Schließglied, bspw. ein Klappenventil zu überwachen und zu steuern ist, die Sensorik 72 für eine Drehstellungserfassung ausgelegt ist.

Die Aktuatorik 74 ist von der Sensorik 72 getrennt angeordnet und somit nicht im Gehäuse 76 der Sensorik 72 angeordnet, sondern extern zur Sensorik 72 angeordnet, jedoch ebenfalls in unmittelbarer Nähe zum Ventil 10.

Die Aktuatorik 74 weist entsprechend der im Ausführungsbeispiel vorhandenen drei Drucklufteinlässe 58, 60, 62 drei schaltbare Pneumatikventile 78, 80 und 82 auf, wobei das Pneumatikventil 78 dem Drucklufteinlass 58, das Pneumatikventil 80 dem Drucklufteinlass 60 und das Pneumatikventil 82 dem Drucklufteinlass 62 zugeordnet ist.

Die schaltbaren Pneumatikventile 78, 80 und 82 sind im Ausführungsbeispiel als Magnetventil ausgebildet, können aber auch in anderen Ausgestaltungen allgemein als elektrisch oder elektromagnetisch betätigbare Ventile ausgebildet sein.

Vorzugsweise sind die Pneumatikventile 78, 80 und 82 in in den Drucklufteinlässen 58, 60 und 62 jeweils vorhandenen Druckluftanschlüssen (nicht näher dargestellt) integriert. Druckluftleitungen 84, 86 und 88, die jeweils vom Ausgang des entsprechenden Pneumatikventils 78, 80 bzw. 82 zu dem entsprechenden Drucklufteinlass 58, 60 bzw. 62 führen, können dann entsprechend entfallen bzw. sind durch den jeweiligen Druckluftanschluss selbst realisiert.

Zu den Eingängen der Pneumatikventile 78, 80 und 82 führen Druckluftversorgungsleitungen 90, 92 und 94, die relativ kurz ausgeführt sein können, und die über einen Verteiler 96 mit einer Drucklufthauptversorgungsleitung 98 verbunden sind.

Die Aktuatorik 74 in Form der Pneumatikventile 78, 80 und 82 wird über die Sensorik 72 angesteuert. Hierzu weist die Sensorik 72 eine Steuerelektronik 100 auf, die über entsprechende Steuersignalleitungen 102, 104 und 106 mit der Aktuatorik 74, hier mit den Pneumatikventilen 78, 80 und 82 verbunden ist, um die Pneumatikventile 78, 80 und 82 der Aktuatorik 74 entsprechend anzusteuern, worunter optional auch das Versorgen mit Spannung zu verstehen ist, um das Schließglied 16 in Abhängigkeit von dem von der Sensorik 72 erfassten Stellzustand zu stellen.

Während für das zweite Schließglied 18 in dem gezeigten Ausführungsbeispiel keine Erfassung des Stellzustandes vorgesehen ist, versteht es sich, dass die Sensorik 72 auch eine entsprechende Erfassung des Stellzustandes des zweiten Schließgliedes 18 umfassen kann.

Dadurch, dass die Sensorik 72 die Aktuatorik 74 unmittelbar aufsteuert, ist lediglich eine Steuersignalleitung 108 erforderlich, die die Sensorik 72 mit einer zentralen Steuereinheit verbindet, wodurch der Verschaltungsaufwand deutlich reduziert ist.

## Patentansprüche

1. Vorrichtung zum Überwachen und Steuern eines Stellzustandes zumindest eines Schließgliedes (16) eines Ventils (10) einer prozesstechnischen Anlage, mit einer Sensorik (72) zum Erfassen des Stellzustandes des zumindest einen Schließgliedes (16), und mit einer Aktuatorik (74) zum Stellen des zumindest einen Schließgliedes (16), wobei die Sensorik (72) im oder am Ventil (10) angeordnet ist, und wobei die Aktuatorik (74) getrennt von der Sensorik (72) angeordnet ist, **dadurch gekennzeichnet, dass** die Sensorik (72) eine Steuerelektronik (100) zum Steuern der Aktuatorik (74) aufweist und die Aktuatorik (74) unmittelbar ansteuert, um das zumindest eine Schließglied (16) in Abhängigkeit von dem von der Sensorik (72) erfassten Stellzustand zu stellen.

2. Vorrichtung nach Anspruch 1, **dadurch gekennzeichnet, dass** die Aktuatorik (74) von der Sensorik (72) getrennt am Ventil (10) angeordnet ist.

3. Vorrichtung nach Anspruch 1 oder 2, **dadurch gekennzeichnet, dass** die Sensorik (72) in einem Gehäuse (76) aufgenommen ist, das am Ventil (10) angeordnet ist.

4. Vorrichtung nach einem der Ansprüche 1 bis 3, **dadurch gekennzeichnet, dass** die Sensorik (72) über zumindest eine Steuersignalleitung (102, 104, 106) mit der Aktuatorik (74) verbunden ist.

5. Vorrichtung nach einem der Ansprüche 1 bis 4, **dadurch gekennzeichnet, dass** das zumindest eine Schließglied (16) mittels eines Pneumatikantriebes (30) stellbar ist, und dass die Aktuatorik (74) zumindest ein schaltbares Pneumatikventil (78, 80, 82) aufweist, das die Druckluftzufuhr zum Stellen des zumindest einen Schließgliedes (16) steuert, wobei die Steuerelektronik (100) das zumindest eine Pneumatikventil (78, 80, 82) ansteuert, um dieses zu öffnen oder zu schließen.

6. Vorrichtung nach Anspruch 5, **dadurch gekennzeichnet, dass** das zumindest eine Pneumatikventil (78, 80, 82) ein elektrisch oder elektromagnetisch betätigbares Ventil, insbesondere ein Magnetventil ist.

7. Vorrichtung nach Anspruch 5 oder 6, **dadurch gekennzeichnet, dass** das zumindest eine Pneumatikventil (78, 80, 82) an einem Druckluftanschluss an einem Gehäuse (32) des Pneumatikantriebes (30) des Ventils (10) angeordnet ist.

8. Vorrichtung nach einem der Ansprüche 5 bis 7, **dadurch gekennzeichnet, dass** die Aktuatorik (74) eine Mehrzahl von schaltbaren Pneumatikventilen (78, 80, 82) aufweist, die an einer Mehrzahl an Druckluftanschlüssen am Ventil (10) angeordnet sind.

9. Vorrichtung nach einem der Ansprüche 1 bis 8, **dadurch gekennzeichnet, dass** die Sensorik (72) zum Erfassen von Stellzuständen mehrerer Schließglieder (16, 18) des Ventils (10) ausgelegt ist.

10. Ventil einer prozesstechnischen Anlage, mit zumindest einem Schließglied (16), und mit einer Vorrichtung (70) zum Überwachen und Steuern eines Stellzustandes des zumindest einen Schließgliedes (16) gemäß einem der Ansprüche 1 bis 9.

## Claims

1. Apparatus for monitoring and controlling a regulation state of at least one closing member (16) of a valve (10) of a process engineering plant, comprising a sensory mechanism (72) for detecting the regulation state of the at least one closing member (16), and an actuation mechanism (74) for regulating the at least one closing member (16), wherein the sensory mechanism (72) is arranged in or on the valve (10), and wherein the actuation mechanism (74) is arranged in a fashion separated from the sensory mechanism (72), **characterized in that** the sensory mechanism (72) comprises control electronics (100) for controlling the actuation mechanism (74) and directly triggers the actuation mechanism (74), in order to regulate the at least one closing member (16) in dependence of the regulation state detected by the sensory mechanism (72).

2. Apparatus according to claim 1, **characterized in that** the actuation mechanism (74) is arranged on the valve (10) in a fashion separated from the sensory mechanism (72).

3. Apparatus according to claim 1 or 2, **characterized in that** the sensory mechanism (72) is accommodated in a housing (76) which is arranged on the valve (10).

4. Apparatus according to any one of claims 1 to 3, **characterized in that** the sensory mechanism (72) is connected to the actuation mechanism (74) via at least one control signal line (102, 104, 106).

5. Apparatus according to any one of claims 1 to 4, **characterized in that** the at least one closing member (16) is regulatable by means of a pneumatic drive (30), and that the actuation mechanism (74) comprises at least one switchable pneumatic valve (78, 80, 82), which controls the pressurized air supply for regulating the at least one closing member (16), wherein the control electronics (100) triggers the at least one pneumatic valve (78, 80, 82) in order to open or close same.

6. Apparatus according to claim 5, **characterized in that** the at least one pneumatic valve (78, 80, 82) is an electrically or electromagnetically actuatable valve, in particular a solenoid valve.

7. Apparatus according to claim 5 or 6, **characterized in that** the at least one pneumatic valve (78, 80, 82) is arranged on a pressurized-air connection on a housing (32) of the pneumatic drive (30) of the valve (10).

8. Apparatus according to any one of claims 5 to 7, **characterized in that** the actuation mechanism (74) comprises a plurality of switchable pneumatic valves (78, 80, 82), which are arranged on a plurality of pressurized-air connections on the valve (10).

9. Apparatus according to any one of claims 1 to 8, **characterized in that** the sensory mechanism (72) is configured to detect regulation states of multiple closing members (16, 18) of the valve (10).

10. Valve of a process engineering plant, comprising at least one closing member (16), and an apparatus (70) for monitoring and controlling a regulation state of the at least one closing member (16) according to any one of claims 1 to 9.

## Revendications

1. Dispositif de surveillance et de commande d'un état de réglage au moins d'un organe de fermeture (16) d'une soupape (10) d'une installation de processus technique, avec un système de capteurs (72) pour détecter l'état de réglage d'au moins un organe de fermeture (16), et avec un système d'actionneurs (74) pour le réglage d'au moins un organe de fermeture (16), dans lequel le système de capteurs (72) est agencé dans ou sur la soupape (10), et dans lequel le système d'actionneurs (74) est agencé séparément du système de capteurs (72), **caractérisé en ce que** le système de capteurs (72) présente une électronique de commande (100) pour la commande du système d'actionneurs (74) et commande directement le système d'actionneurs (74) afin de régler l'au moins un organe de fermeture (16) en fonction de l'état de réglage détecté par le système de capteurs (72).

2. Dispositif selon la revendication 1, **caractérisé en ce que** le système d'actionneurs (74) est agencé séparément du système de capteurs (72) sur la soupape (10).

3. Dispositif selon la revendication 1 ou 2, **caractérisé en ce que** le système de capteurs (72) est reçu dans un boîtier (76) qui est agencé sur la soupape (10).

4. Dispositif selon l'une des revendications 1 à 3, **caractérisé en ce que** le système de capteurs (72) est relié par au moins une conduite de signal de commande (102, 104, 106) au système d'actionneurs (74).

5. Dispositif selon l'une des revendications 1 à 4, **caractérisé en ce que** l'au moins un organe de fermeture (16) est réglable à l'aide d'un entraînement pneumatique (30), et **en ce que** le système d'actionneurs (74) présente au moins une soupape pneumatique (78, 80, 82) commutable qui commande l'alimentation en air comprimé pour le réglage d'au moins un organe de fermeture (16), dans lequel l'électronique de commande (100) commande l'au moins une soupape pneumatique (78, 80, 82) afin de l'ouvrir ou de la fermer.

6. Dispositif selon la revendication 5, **caractérisé en ce que** l'au moins une soupape pneumatique (78, 80, 82) est une soupape actionnable par voie électrique ou électromagnétique, en particulier une soupape magnétique.

7. Dispositif selon la revendication 5 ou 6, **caractérisé en ce que** l'au moins une soupape pneumatique (78, 80, 82) est agencée sur un raccord d'air comprimé à un boîtier (32) de l'entraînement pneumatique (30) de la soupape (10).

8. Dispositif selon l'une des revendications 5 à 7, **caractérisé en ce que** le système d'actionneurs (74) présente une pluralité de soupapes pneumatiques (78, 80, 82) commutables qui sont agencées sur une pluralité de raccords d'air comprimé sur la soupape (10).

9. Dispositif selon l'une des revendications 1 à 8, **caractérisé en ce que** le système de capteurs (72) est conçu pour la détection d'états de réglage de plusieurs organes de fermeture (16, 18) de la soupape (10).

10. Soupape d'une installation de processus technique, avec au moins un organe de fermeture (16), et avec un dispositif (70) pour la surveillance et la commande d'un état de réglage de l'au moins un organe de fermeture (16) selon l'une des revendications 1 à 9.
